# EUROPEAN PATENT SPECIFICATION

(11) **EP 3 946 802 B1**
(45) Date of publication and mention of the grant of the patent: **10.09.2025**
(21) Application number: 19716116.9
(22) Date of filing: 02.04.2019
(51) Int. Cl.: B23K 26/12, B23K 26/142, B23K 26/14, B23K 26/70

(54) **APPARATUS FOR PROCESSING OF A WORKPIECE BY MEANS OF AT LEAST ONE ENERGY BEAM, SHIELDING DEVICE FOR SUCH AN APPARATUS, AND METHOD OF PROCESSING OF A WORKPIECE BY MEANS OF AT LEAST ONE ENERGY BEAM**
VORRICHTUNG ZUR BEARBEITUNG EINES WERKSTÜCKS MITTELS MINDESTENS EINES ENERGIESTRAHLS, ABSCHIRMVORRICHTUNG FÜR EINE SOLCHE VORRICHTUNG UND VERFAHREN ZUR BEARBEITUNG EINES WERKSTÜCKS MITTELS MINDESTENS EINES ENERGIESTRAHLS
DISPOSITIF DE TRAITEMENT D'UNE PIÈCE AU MOYEN D'AU MOINS UN FAISCEAU D'ÉNERGIE, DISPOSITIF DE PROTECTION POUR UN TEL APPAREIL ET PROCÉDÉ DE TRAITEMENT D'UNE PIÈCE AU MOYEN D'AU MOINS UN FAISCEAU D'ÉNERGIE

(43) Date of publication of application: 09.02.2022
(73) Proprietor: EuWe Eugen Wexler Holding GmbH & Co. KG, 91207 Lauf a. d. Pegnitz (DE)
(72) Inventor: SINGER, Ferdinand, 90552 Röthenbach (DE); SÖRGEL, Thomas, 91241 Kirchensittenbach (DE); OTT, Frederick, 90403 Nürnberg (DE); JANSEN, Helge, 93161 Sinzing (DE)
(74) Representative: Hafner & Kohl PartmbB
(86) International application number: PCT/EP2019/058332
(87) International publication number: WO 2020/200439

(56) References cited:
- EP-A1- 3 315 248
- DE-A1- 2 152 100
- JP-A- S57 156 888
- US-A- 4 368 080
- US-A1- 2018 200 832
- US-B2- 7 220 935

## Description

The invention refers to an apparatus for processing of a workpiece by means of at least one energy beam, particularly a laser beam, the apparatus comprising a processing device configured to direct at least one primary energy beam, particularly a primary laser beam, towards a workpiece so as to process the workpiece.

Respective apparatuses for processing, e.g. cutting, depositing, marking, structuring, welding, etc., of a workpiece by means of at least one energy beam, particularly a laser beam, are generally known from prior art. Respective apparatus typically, comprise a processing device, e.g. a processing head, configured to direct at least one primary energy beam, particularly a primary laser beam, towards a processing region of a workpiece so as to process the workpiece.

In order to meet energy beam processing related process requirements, e.g. quality requirements and/or safety requirements, an operator has to provide suitable measures to avoid that the respective energy beam and/or a secondary energy beam, particularly generated by the reflection of a respective energy beam at the workpiece, is directed to different regions than the actual desired processing region of the workpiece which is to be processed by means of the respective apparatus. Known approaches for meeting such processing requirements are in need of improvement in terms of their functional and/or constructive design.

Background prior art is disclosed in documents DE2152100, JPS57156888, US4368080, US7220935, and US2018200832.

EP3315248 (which forms the basis for the preamble of claims 1 and 14) discloses a nozzle for a laser processing head comprising a containment device provided with two seals mounted to the outer shell and to the inner wall and adapted to contact a workpiece.

In view of the foregoing, it is the object of the invention to provide an improved functional and/or constructive design of an apparatus for processing of a workpiece by means of at least one energy beam, particularly a laser beam, which allows for meeting respective energy beam processing related process requirements.

This object is achieved by an apparatus for processing of a workpiece by means of at least one energy beam, particularly a laser beam according to Claim 1. The Claims depending on Claim 1 refer to possible embodiments of the apparatus according to Claim 1.

The invention is defined by the subject-matter of the appended Claims which are to be construed in accordance with the description and drawings.

A first aspect of the invention refers to an apparatus (hereinafter "apparatus") for processing of a workpiece by means of at least one energy beam, particularly a laser beam. The apparatus may be configured for cutting, depositing, marking, structuring, welding, etc. of a workpiece by means of at least one energy beam, particularly a laser beam. As such, the apparatus may be embodied as a cutting (or machining) device configured to cut (or machine) a workpiece by means of at least one energy beam, particularly a laser beam, a depositing device configured to deposit a material or material structure on a workpiece by means of at least one energy beam, particularly a laser beam, a marking device configured mark a workpiece by means of at least one energy beam, particularly a laser beam, a structuring device configured to structure a workpiece by means of at least one energy beam, particularly a laser beam, or a welding device configured to weld at least one workpiece by means of at least one energy beam, particularly a laser beam. Other applications allowing for an energy beam based, particularly a laser beam based, processing of a workpiece and/or a surface of a workpiece are conceivable. A workpiece may be made of a ceramic, glass, metal, polymer, or semiconductor, for instance.

The apparatus comprises a processing device configured to direct at least one primary energy beam, particularly a primary laser beam, towards a workpiece, particularly towards a processing region of a workpiece, so as to process the workpiece, particularly the processing region of the workpiece, by means of the processing device and apparatus, respectively. A respective processing device may comprise an energy beam directing unit configured to direct at least one primary energy beam towards a workpiece. A respective energy beam direction unit may comprise at least one energy beam directing element allowing for directing a primary energy beam towards a workpiece. A respective energy beam directing element may comprise at least one optical element such as a mirror, a lens, etc. A respective optical element may be controllable or controlled with respect to its position and/or orientation which allows for concertedly directing a respective primary energy beam in at least one defined energy beam path along the workpiece and/or for concertedly adjusting other energy beam related parameters such as the focal spot size and/or focal position of a respective primary energy beam.

A respective processing device may comprise at least one energy beam exit window through which a primary energy beam may exit the processing device towards a workpiece, particularly towards a processing region of a workpiece, so as to process the workpiece, particularly the processing region of the workpiece, by means of the processing device and apparatus, respectively.

A respective processing device may comprise a primary energy beam generating unit, particularly a primary laser beam generating unit, configured to generate at least one primary energy beam which is to be directed towards a workpiece, particularly towards a processing region of a workpiece, so as to process the workpiece, particularly the processing region of the workpiece, by means of the processing device and apparatus, respectively.

A respective processing device may be built as or comprise a processing head. A respective processing head may comprise a housing structure in which functional units of the processing head, e.g. a respective energy beam directing unit, are disposed. A respective housing structure may be moveably supported, particularly relative to a workpiece which is to be processed by means of the processing device and apparatus, respectively in at least one degree of freedom of motion, e.g. a translational and/or rotational degree of freedom of motion.

The apparatus further comprises a shielding device configured to shield the at least one primary energy beam and/or at least one secondary energy beam, particularly generated by reflection of the at least one primary energy beam at the workpiece. The shielding device comprises at least one shielding element configured to extend between the processing device, particularly an energy beam exit window of the processing device, and a workpiece which is to be processed by means of the processing device and apparatus, respectively. The dimensions of the shielding device, i. e. particularly its longitudinal dimensions, may be chosen in such a manner that the shielding device may extend or extends between the processing device, particularly an energy beam exit window of the processing device, and a workpiece which is to be processed by means of the processing device and apparatus, respectively.

The shielding device comprises at least one shielding element. The at least one shielding element comprises, i.e. particularly defines or delimits, a shielded inner space or inner volume which extends between the processing device, particularly an energy beam exit window of the processing device, and a workpiece through which a primary energy beam may be directed towards the workpiece when the processing device is in an operating position for processing a workpiece which is to be processed by means of the processing device and apparatus, respectively. Likewise, secondary energy beams, e.g. energy beams generated by reflection of a primary energy beam at the workpiece, may be generated through the shielded space or volume defined or delimited by the shielding element when the processing device is in an operating position for processing a workpiece. Hence, both primary energy beams and secondary energy beams may be shielded by means of the shielding element such that neither primary energy beams nor secondary energy beams may exit the shielded space or volume in undesired manner. Nonetheless, the shielded inner space or inner volume comprises, i.e. particularly leads to, an opening of the shielding element - the opening is typically provided at a free (distal) end of the shielding element - through which a primary energy beam may exit the shielding element, particularly so as to impinge on a workpiece which is to be processed by means of the processing device and apparatus, respectively.

As such, the shielding element results in an improved functional and/or constructive design of an apparatus for processing of a workpiece by means of at least one energy beam, particularly a laser beam, which allows for meeting respective energy beam processing related process requirements, e.g. quality requirements and/or safety requirements.

The at least one shielding element comprises, particularly a conduct- or tube-like, shielding element base body. The shielding element base body may comprise at least one wall element defining or delimiting a channel or passageway for directing a primary energy beam towards a workpiece, i.e. particularly towards a processing region of a workpiece, so as to process the workpiece. The channel or passageway thus, forms part of the shielded inner space or inner volume of the shielding element mentioned above. The shielding element base body may have a circular cross-section; yet, other cross-sections are conceivable.

A hollow insert element may be provided which is insertable or inserted into the channel or passageway. The dimensions of the hollow insert element, i.e. particularly its outer diameter, may be adapted to the dimensions, i.e. particularly the inner diameter, of the channel or passageway or the wall element defining or delimiting the channel or passageway, respectively. Particularly, the cross-sectional shape of the insert element may be adapted to the cross-sectional shape of the channel or passageway or the wall element defining or delimiting the channel or passageway, respectively. As such, the hollow insert element may have a pipe- or tube-like shape, for instance. The hollow insert element may be made of a material which is resistant to respective primary and/or secondary energy beams. A suitable material for building the hollow insert is a metal, e.g. a steel, for instance.

The shielding element base body comprises at least one wall element comprising at least one contact portion which, particularly directly, contacts a workpiece during operation of the apparatus. A respective contact portion is typically, provided with a free (distal) end portion of the respective wall element of the shielding element base body. The contact portion is thus, configured to directly abut against a workpiece during operation of the apparatus such that a closed space or volume extending between the workpiece, i.e. particularly the surface of the workpiece, and the processing device is generatable or generated. The closed space or volume is particularly, delimited by the workpiece, the wall element of the shielding element base body, which defines or delimits the channel or passageway, and the processing device, particularly an energy beam exit window of the processing device. Thus, the closed space or volume also comprises the shielded inner space or inner volume of the shielding element.

According to an exemplary embodiment, at least the contact portion may comprise an elastic and/or soft material and/or an elastic and/or soft material structure allowing for a, particularly gas-tight, abutment or contact between the contact portion and a workpiece which is to be processed by means of the processing device and apparatus, respectively. As such, an undesired exit of primary or secondary energy beams out of the closed space or volume is not possible. Also, process gases, residues, and other byproducts, such as smoke-like particles, generated during operation of the apparatus cannot exit the closed space or volume in undesired manner. An elastic and/or soft material may comprise an elastic and/or soft polymer material, particularly a polymer material having high-temperature stability, such as PA, PC, PET, POM, etc. The term "polymer material" also embraces mixtures of at least two chemically different polymer materials. An elastic material structure may comprise a material structure allowing for a certain degree of elasticity and/or flexibility such as a bellows-like material structure, for instance.

According to an additional or alternate exemplary embodiment, at least the contact portion may comprise a geometric shape which is selected based on a contour of a specific workpiece which is to be processed by means of the processing device and apparatus, respectively. Hence, the shape of the contact portion may follow the shape of a workpiece which is to be processed; merely as an example, the contact portion may have a plane shape for processing a corresponding plane workpiece, may have a curved shape for processing a corresponding curved workpiece, or may have a free-form shape for processing a corresponding free-form workpiece. As such, the contact portion allows for a gas-tight abutment or contact between the contact portion and a workpiece which is to be processed by means of the processing device and apparatus, respectively. As such, an undesired exit of primary or secondary energy beams out of the closed space or volume is not possible. Also, process gases, residues, and other byproducts, such as smoke-like particles, generated during operation of the apparatus cannot exit the closed space or volume in undesired manner.

The shielding element base body may be extendable between at least a first extended state, e.g. a non-extended state, and at least a second extended state, e.g. an extended state, different from the first extended state, particularly so as to bridge different distances between the processing device and a workpiece which is to be processed by means of the processing device and apparatus, respectively. As such, the shielding element base body may be provided with flexibility such that it can be used in processing settings which may require different distances between the processing head and the workpiece which is to be processed by means of the processing device and apparatus, respectively. A drive device, e.g. a motor, may be assigned to the shielding element base body. The drive device may be configured to, particularly automatically, transfer the shielding element base body in the respective first and second extended states.

The shielding element base body comprises the or at least one wall element, particularly at least one wall element comprising at least one respective contact portion, whereby the at least one wall element comprises at least one free inner space. Hence, at least one wall element of the shielding element base body is provided with at least one free inner space. A respective free inner space is built as a chamber within the at least one wall element of the shielding element base body. It is possible that the at least one wall element is provided with at least two respective free inner spaces which may communicate with each other or which may not communicate with each other. The geometry and volume of respective inner spaces is essentially defined by the constructive design of the shielding element base body. For an example of a cylindrical shielding element base body, a respective inner space may comprise a ring- or ring-segment shape, for instance.

A respective free inner space may be built by wall-portions of a double-walled section of the at least one wall element of the shielding element base body. Hence, the shielding element base body may comprise at least one wall element being provided with a double-walled section, whereby the wall-portions of the double-walled section define or delimit a respective free inner space.

The shielding element base body comprises at least one further opening provided with the contact portion, which is typically, provided with a free distal end portion of the respective wall element of the shielding element base body. The free inner space is communicatively connected with the at least one opening provided with the contact portion. Hence, given the at least one opening provided with the contact portion is closed, e.g. by abutting the contact portion against a workpiece, the inner volume extending between the at least one opening and the free inner space is closed as well.

Likewise, an adapter-like connection element comprising the at least one contact portion or at least one contact portion, which contact portion, particularly directly, contacts a workpiece during operation of the apparatus, and the at least one opening provided with the at least one contact portion may be provided. The adapter-like connection element is, particularly detachably, connectable or connected with the shielding element base body. The free inner space of the shielding element base body is communicatively connected with the at least one opening provided with the contact portion when the adapter-like connection element is connected with the shielding element base body. As such, the opening provided with the adapter-like connection element is in fluid-connection with the free-inner space of the shielding element base body when the adapter-like connection element is connected with the shielding element base body. The adapter-like connection element and the shielding element base body may be provided with connection interfaces configured to interact so as to connect the adapter-like connection element with the shielding element base body, and vice versa. A respective, connection interface may be provided as a mechanical connection interface, such as a clamping, clicking, screwing interface, for instance.

In either case, the at least one contact portion is configured to abut against a workpiece during operation of the apparatus thereby, closing the at least one further opening. More particularly, the at least one contact portion is configured to abut against a workpiece during operation of the apparatus thereby, closing the at least one further opening in gas-tight manner such that a specific atmosphere and/or a specific pressure level within the at least one free inner space is maintained and/or a specific medium contained within the at least one free inner space cannot exit the free inner space via the at least one opening.

The apparatus comprises an atmosphere generating device assigned to the at least one free inner space, the atmosphere generating device configured to generate and/or maintain a specific atmosphere within the at least one free inner space. A respective atmosphere generating device may be embodied as or comprise a gas supply device configured to generate and/or maintain a specific gas atmosphere in the free inner space. Additionally or alternatively, the apparatus comprise a pressure level generating device assigned to the at least one free inner space, the pressure level generating device configured to generate and/or maintain a specific pressure level within the at least one free inner space. A respective pressure level generating device may be embodied as or comprise a pump device configured to generate and/or maintain specific pressure level in the free inner space. Also, a respective pressure level generating device may be embodied as or comprise a Venturi-pipe or -nozzle. As such, a specific atmosphere, e.g. a specific gas atmosphere, such as an inert gas atmosphere, and/or a specific pressure level, e.g. an under pressure, such as a vacuum, or an overpressure, may be generated and/or maintained in the at least one free inner space. As will be more apparent from below, generating a specific atmosphere and/or a specific pressure level within the at least one free inner space enables monitoring if the shielding element base body is correctly oriented and/or positioned relative to a workpiece which is to be processed by means of the processing device and apparatus, respectively, which is typically given when the at least one contact portion of the at least one wall element (directly) abuts against the workpiece which is to be processed by means of the processing device and apparatus, respectively.

The apparatus may further comprise a detection device assigned to the at least one free inner space, the detection device configured to detect an atmosphere and/or a pressure level and/or a medium within the at least one free inner space and/or configured to detect changes of an atmosphere and/or a pressure level and/or a medium within the at least one free inner space. A respective detection device may be embodied as or comprise at least one sensor device configured to sense chemical and/or physical quantities allowing for directly or indirectly deriving information on an atmosphere and/or a pressure level and/or a medium within the at least one free inner space and respective changes, respectively. A concrete example of a respective sensor device is a gas sensor, a pressure sensor, a temperature sensor. Yet, other embodiments of sensor devices are conceivable.

The detection device may also be configured to generate a detection information indicating a detected atmosphere and/or a detected pressure level and/or a detected medium within the at least one free inner space and/or a detected change of an atmosphere and/or a detected change of a pressure level and/or a detected change of a medium within the at least one free inner space. A respective detection information may be directly or indirectly output to a hardware- and/or software embodied control device of the apparatus and/or output to an operator of the apparatus. A respective detection information may particularly, trigger outputting a, particularly audible, visual, or tactile, warning signal to an operator.

The apparatus may thus, comprise a hardware- and/or software embodied control device configured to control operation of the processing device, particularly of an energy beam generating unit of the or assigned to the processing device, based on a detection information generated by the detection device. As such, the operation of the processing device may be controlled based on a detected condition, e.g. an atmosphere condition, a pressure condition, etc., within the at least one free inner space. Particularly, the operation of the processing device may be changed, particularly interrupted, when a detection information indicates a change of a detected quantity, e.g. atmosphere, pressure level, etc., within the at least one free inner space. In this regard, pre-definable or pre-defined threshold values may be taken into account such that a change, particularly an interrupt, of the operation of the processing device is only effected when a detection information indicates that a detected quantity is above or below a (quantity-specific) threshold value. A respective control device may thus, be configured to interrupt operation of the processing device and/or to generate and communicate a, particularly acoustic, visual, or tactile, warning signal to an operator when a detection information generated by the detection device indicates that an atmosphere and/or pressure level and/or medium reaches or exceeds a specific threshold value.

As a concrete example, a specific atmosphere and/or a specific pressure level within the at least one free inner space will typically change when the contact portion of the at least one wall element does not directly abut against the workpiece which is to be processed by means of the processing device and apparatus, respectively. A respective change of specific atmosphere and/or a specific pressure level within the at least one free inner space can be correlated with a leakage. A respective change will be detected by the detection device and a respective detection information will be generated which may result in that the operation of the processing device will be interrupted until the contact portion directly abuts the workpiece which is to be processed by means of the processing device and apparatus, respectively again. As such, monitoring if the shielding element base body is correctly oriented and/or positioned relative to a workpiece which is to be processed by means of the processing device and apparatus, respectively, which is typically given when the contact portion of the at least one wall element directly abuts against the workpiece which is to be processed by means of the processing device and apparatus, respectively, is enabled. Further, perforation, damage, etc., of a wall element, e.g. caused by energy beams, particularly be secondary energy beams, can be detected since also in this case change of specific atmosphere and/or a specific pressure level within the free inner space can occur which is detectable by the detection device.

The apparatus may further comprise a suction device configured to generate and/or maintain a suction stream allowing for removing, particularly smoke-like, process gases and/or, particularly smoke-like, residues generated during operation of the apparatus from the channel or passageway defined or delimited by the at least one wall element. A respective suction device may be embodied as or comprise a pump device configured to remove, particularly smoke-like, process gases and/or, particularly smoke-like, residues generated during operation of the apparatus from the channel or passageway defined or delimited by the at least one wall element. Hence, process gases and/or residues which may negatively affect the properties of the primary energy beam can be efficiently removed from the channel or passageway delimited by the at least one wall element. Further, a controlled atmosphere and/or pressure level can be generated and/or maintained in the channel or passageway.

The suction device may comprise a streaming channel structure communicating with the channel or passageway, the streaming channel structure comprising at least one streaming channel through which the suction stream may stream during operation of the suction device, whereby the at least one streaming channel comprises at least two streaming channel sections being differently oriented relative to each other. As such, respective streaming channel sections may form a labyrinth structure. Hence, the design of the at least one streaming channel is chosen in such a manner, that an energy beam which has entered the streaming channel at a first streaming channel section will impinge upon a wall element defining or delimiting a second channel section such that the energy beam is at least partly absorbed by the respective wall element. As such, wall elements having specific energy beam absorption properties, e.g. due to a specific absorption material, absorption coating, etc., are preferred.

For the same purpose, the shielding element base body may be at least partly, particularly completely, made from a material or material structure configured to absorb energy beams, particularly secondary energy beams. As such, the shielding element base body may comprise wall elements having specific energy beam absorption properties, e.g. due to a specific absorption material, absorption coating, absorption color, etc.

The shielding element may comprise an adapter-like connection element configured to, particularly detachably, connect the shielding element base body with the processing device, particularly with a housing structure of the processing device. As such, the shielding device may be easily connected and, if required, e.g. due to service and/or repair, disconnected from the processing device and vice versa. A respective adapter-like connection element is provided with a connection interface configured to enable a stable, yet typically detachable, connection of the shielding element base body with the processing device. A respective a connection interface may be provided as a mechanical connection interface, such as a clamping, clicking, screwing interface, for instance.

A respective adapter-like connection element may be integral with the shielding element base body or integral with the processing device. Yet, it is also conceivable that a respective adapter-like connection element is a separate component which is connectable with the shielding element base body and the processing device, particularly a housing structure of the processing device.

The shielding element base body may be at least partly, particularly completely, made from a polymer material. Yet, the shielding element base body may also be made be at least partly, particularly completely, made from a non-polymer material, e.g. a metal.

The shielding element base body is completely an additively manufactured component. Additively manufacturing the shielding element base body is of advantage since it allows for integrating different functionalities. All kinds of additive manufacturing processes may be used for manufacturing the shielding element base body. Merely as an example, selective laser sintering processes, selective laser melting processes, fused deposition modelling processes, binder jetting processes, may be used.

In either case, the shielding device may comprise a first conduct- or tube-like shielding element and at least one further conduct- or tube-like shielding element which may be connectable or connected with the processing device. The at least one further shielding element may be connectable or connected in between the shielding element, i.e. the shielding element which contacts the workpiece during operation the apparatus, and the processing device, particularly an energy beam exit window of the processing device. In this embodiment, the wall elements of the shielding elements, when connected, commonly define or delimit a respective channel or passageway for directing a primary energy beam towards a workpiece. Hence, all above annotations with respect to the at least one shielding element apply in analogous manner.

A second aspect of the invention refers to a shielding device for an apparatus for processing of a workpiece by means of an energy beam according to claim 14, particularly an apparatus as described herein. The shielding device is configured to shield at least one primary energy beam of a processing device of an apparatus the shielding device is assignable or assigned to and/or at least one secondary energy beam, particularly generated by reflection of the at least one primary energy beam at a workpiece which is to be processed by means of the processing device and apparatus, respectively the shielding device is assignable or assigned to, the shielding device configured to extend between a processing device, particularly an energy exit window of the processing device, of an apparatus the shielding device is assignable or assigned to and a workpiece which is to be processed by means of the processing device and apparatus, respectively the shielding device is assignable or assigned to, whereby the shielding device comprises at least one shielding element comprising a, particularly conduct- or tube-like, shielding element base body, whereby the shielding element base body comprises at least one wall element comprising at least one free inner space. All annotations concerning the apparatus also apply to the shielding device.

A third aspect (not part of the invention) refers to a method of processing of a workpiece by means of at least one energy beam, particularly a laser beam. According to the method, an apparatus as described herein is used for performing the method. All annotations concerning the apparatus also apply to the method.

Exemplary embodiments of the invention are described with reference to the Fig., whereby:
Fig. 1 shows a drawing of an apparatus for processing of a workpiece according to a first exemplary embodiment;
Fig. 2 shows a principle drawing of a cut view of an apparatus for processing of a workpiece according to an exemplary embodiment;
Fig. 3 shows a drawing of an apparatus for processing of a workpiece according to a second exemplary embodiment; and
Fig. 4 shows a principle drawing of a cut view of an apparatus for processing of a workpiece according to an exemplary embodiment.

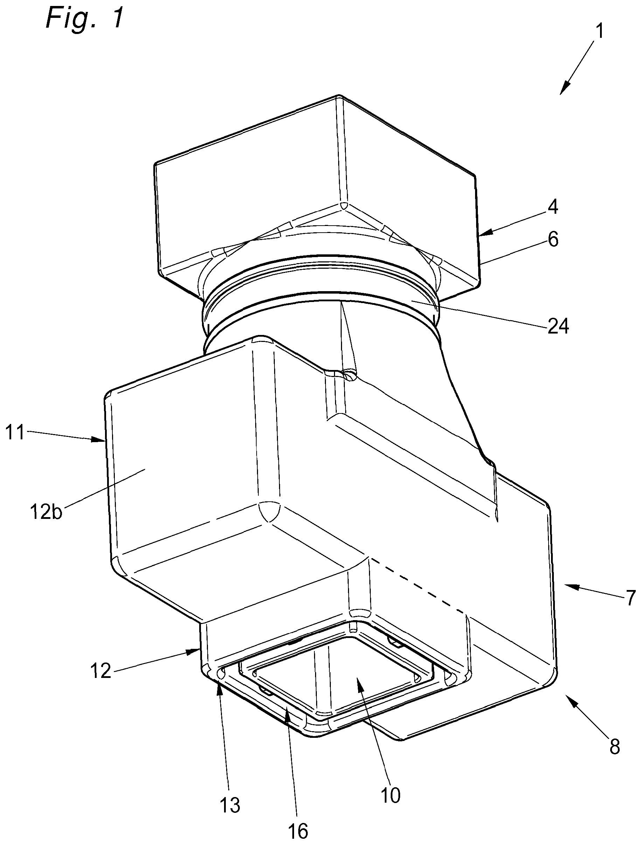

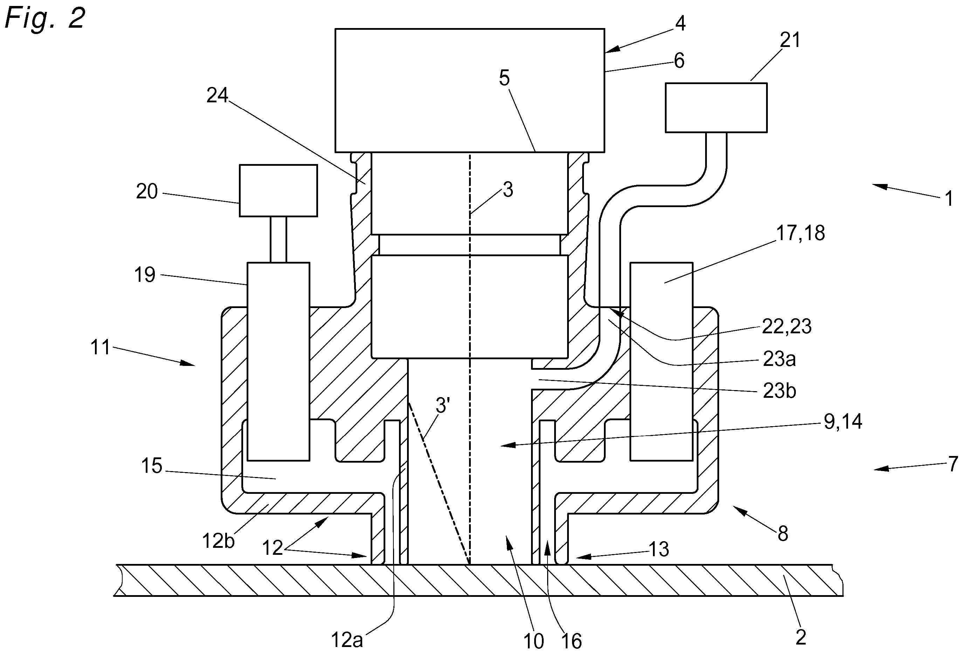

Fig. 1 shows a drawing of an apparatus 1 for processing of a workpiece 2 according to a first exemplary embodiment in an isometric view. Fig. 2 shows a principle drawing of an apparatus 1 for processing of a workpiece 2 according to a corresponding exemplary embodiment.

The apparatus 1 is configured to process a workpiece 2 by means of at least one energy beam 3, particularly a laser beam. The apparatus 1 may particularly, be configured for cutting, depositing, marking, structuring, welding, etc. of a workpiece 2 by means of at least one energy beam 3. As such, the apparatus 1 may be embodied as a cutting (or machining) device configured to cut (or machine) a workpiece 2 by means of at least one energy beam, a depositing device configured to deposit a material or material structure on a workpiece 2 by means of at least one energy beam, a marking device configured to mark a workpiece 2 by means of at least one energy beam, a structuring device configured to structure a workpiece 2 by means of at least one energy beam, or a welding device configured to weld at least one workpiece 2 by means of at least one energy beam. Other applications allowing for an energy beam based processing of a workpiece 2 and/or a surface of a workpiece 2 are conceivable. A workpiece 2 may be made of a ceramic, glass, metal, polymer, or semiconductor, for instance.

The apparatus 1 comprises a processing device 4 configured to direct at least one primary energy beam 3, particularly a primary laser beam, towards a workpiece 2, particularly towards a processing region of a workpiece 2, so as to process the workpiece 2, particularly the processing region of the workpiece 2, by means of the processing device 4 and apparatus 1, respectively. The processing device 4 may comprise an energy beam directing unit (not explicitly shown) configured to direct at least one primary energy beam 3 towards a workpiece 2. A respective energy beam direction unit may comprise at least one energy beam directing element allowing for directing a primary energy beam 3 towards a workpiece 2. A respective energy beam directing element may comprise at least one optical element such as a mirror, a lens, etc. A respective optical element may be controllable or controlled with respect to its position and/or orientation which allows for concertedly directing a respective primary energy beam 3 in at least one defined energy beam path along the workpiece 2 and/or for concertedly adjusting other energy beam related parameters such as the focal spot position and/or size of a respective primary energy beam 3.

The processing device 4 may comprise at least one energy beam exit window 5 through which a primary energy beam 3 may exit the processing device 4 towards a workpiece 2, particularly towards a processing region of a workpiece 2, so as to process the workpiece 2, particularly the processing region of the workpiece 2, by means of the processing device 4 and apparatus 1, respectively.

The processing device 4 may comprise a primary energy beam generating unit (not explicitly shown), particularly a primary laser beam generating unit, configured to generate at least one primary energy beam 3 which is to be directed towards a workpiece 2, particularly towards a processing region of a workpiece 2, so as to process the workpiece 2, particularly the processing region of the workpiece 2, by means of the processing device 4 and apparatus 1, respectively.

As is apparent from the Fig., the processing device 4 may be built as or comprise a processing head. The processing head may comprise a housing structure 6 in which functional units of the processing head, e.g. a respective energy beam directing unit, are disposed. The housing structure 6 may be moveably supported, particularly relative to a workpiece 2 which is to be processed by means of the processing device 4 and apparatus 1, respectively in at least one degree of freedom of motion, e.g. a translational and/or rotational degree of freedom of motion.

The apparatus 1 further comprises a shielding device 7 configured to shield the at least one primary energy beam 3 directed towards the workpiece 2 by means of the processing device 4 and/or at least one secondary energy beam 3', particularly generated by reflection of the at least one primary energy beam 3 at the workpiece 2. The shielding device 7 is configured to extend between the processing device 4, particularly the energy beam exit window 5 of the processing device 4, and a workpiece 2 which is to be processed by means of the processing device 4 and apparatus 1, respectively. The dimensions of the shielding device 7, i. e. particularly its longitudinal dimensions, may be chosen in such a manner that the shielding device 7 may extend or extends between the processing device 4, particularly the energy beam exit window 5 of the processing device 4, and a workpiece 2 which is to be processed by means of the processing device 4 and apparatus 1, respectively.

As is apparent from the Fig., the shielding device 7 comprises a shielding element 8. The shielding element 8 comprises, i.e. particularly defines or delimits, a shielded inner space or inner volume 9 which extends between the processing device 4, particularly the energy beam exit window 5 of the processing device 4, and a workpiece 2 which is to be processed through which a primary energy beam 3 may be directed towards the workpiece 2 when the processing device 4 is in an operating position for processing a workpiece 2 which is to be processed by means of the processing device 4 and apparatus 1, respectively. Likewise, secondary energy beams 3', e.g. energy beams generated by reflection of a primary energy beam 3 at the workpiece 2, may be directed through the shielded space or volume 9 defined or delimited by the shielding element 8 when the processing device 4 is in an operating position for processing a workpiece 2 which is to be processed by means of the processing device 4 and apparatus 1, respectively. Hence, both primary energy beams 3 and secondary energy beams 3' may be shielded by means of the shielding element 8 such that neither primary energy beams 3 nor secondary energy beams 3' may exit the shielded space or volume 9 in undesired manner. Nonetheless, the shielded inner space or inner volume 9 comprises, i.e. particularly leads to, an opening 10 of the shielding element 8 through which a primary energy beam 3 may exit the shielding element 8 so as to impinge on a workpiece 2 which is to be processed by means of the processing device 4 and apparatus 1, respectively. As is apparent from the Fig., the opening 10 is provided at a free (distal) end of the shielding element 8.

As is further apparent from the Fig., the shielding element 8 may comprise a conduct- or tube-like shielding element base body 11. The shielding element base body 11 comprises at least one wall element 12 defining or delimiting a channel or passageway 14 for directing a primary energy beam 3 towards a workpiece 2, i.e. particularly towards a processing region of a workpiece 2, so as to process a workpiece 2. The channel or passageway 14 forms part of the shielded inner space or inner volume 9 of the shielding element 8 mentioned above.

A hollow insert element (not shown) may be provided which is insertable or inserted into the channel or passageway 14. The dimensions of the hollow insert element, i.e. particularly its outer diameter, may be adapted to the dimensions, i.e. particularly the inner diameter, of the channel or passageway 14 or the wall element 12, respectively. Particularly, the cross-sectional shape of the insert element may be adapted to the cross-sectional shape of the channel or passageway 14 or the wall element 12, respectively. As such, the hollow insert element may have a pipe- or tube-like shape. The hollow insert element may be made of a material which is resistant to respective primary and/or secondary energy beams. A suitable material for building the hollow insert is a metal, e.g. a steel, for instance.

As is further apparent from the Fig., the shielding element base body 11 comprises at least one wall element 12 comprising a contact portion 13 which, particularly directly, contacts a workpiece 2 during operation of the processing device 4 and apparatus 1, respectively. The contact portion 13 is provided with a free (distal) end portion of the respective wall element 12 of the shielding element base body 11. The contact portion 13 is thus, configured to directly abut against a workpiece 2 during operation of the processing device 4 and apparatus 1, respectively such that a closed space or volume extending between the workpiece 2, i.e. particularly the surface of the workpiece 2, and the processing device 4 is generatable or generated. The closed space or volume is particularly, delimited by the workpiece 2, the wall element 12 of the shielding element base body 11, which defines or delimits the channel or passageway 14, and the processing device 4, particularly the energy beam exit window 5 of the processing device 4. Thus, the closed space or volume also comprises the shielded inner space or inner volume 9 of the shielding element 8.

The contact portion 13 may comprise an elastic and/or soft material and/or an elastic and/or soft material structure allowing for a, particularly gas-tight, abutment or contact between the contact portion 13 and a workpiece 2 which is to be processed by means of the processing device 4 and apparatus 1, respectively. An elastic and/or soft material may comprise an elastic and/or soft polymer material, particularly a polymer material having high-temperature stability, such as PA, PC, PET, POM, etc. The term "polymer material" also embraces mixtures of at least two chemically different polymer materials. An elastic and/or soft material structure may comprise a material structure allowing for a certain degree of elasticity and/or flexibility such as a bellows-like material structure, for instance.

Additionally or alternatively, the contact portion 13 may comprise a geometric shape which is selected based on a contour of a specific workpiece 2 which is to be processed by means of the processing device 4 and apparatus 1, respectively. Hence, the shape of the contact portion 13 may follow the shape of a workpiece 2 which is to be processed; as is exemplarily shown in the Fig., the contact portion 13 may have a plane shape for processing a corresponding plane workpiece 2. As such, the contact portion 13 allows for a gas-tight abutment or contact between the contact portion 13 and a workpiece 2 which is to be processed by means of the processing device 4 and apparatus 1, respectively.

As is apparent from the Fig. the shielding element base body 11 comprises a wall element 12 comprising a free inner space 15. Hence, a wall element 12 of the shielding element base body 11 is provided with a free inner space 15. The free inner space 15 may be built as a chamber within the wall element 12 of the shielding element base body 11. It is possible that the wall element 12 is provided with at least two respective free inner spaces 15 which may communicate with each other or which may not communicate with each other.

As is further apparent from the Fig., the free inner space 15 may be built by a wall-portions 12a, 12b of a double-walled section of a wall element 12 of the shielding element base body 11. Hence, the shielding element base body 11 may comprise a wall element 12 being provided with a double-walled section, whereby the wall-portions 12a, 12b of the double-walled section define or delimit the free inner space 15.

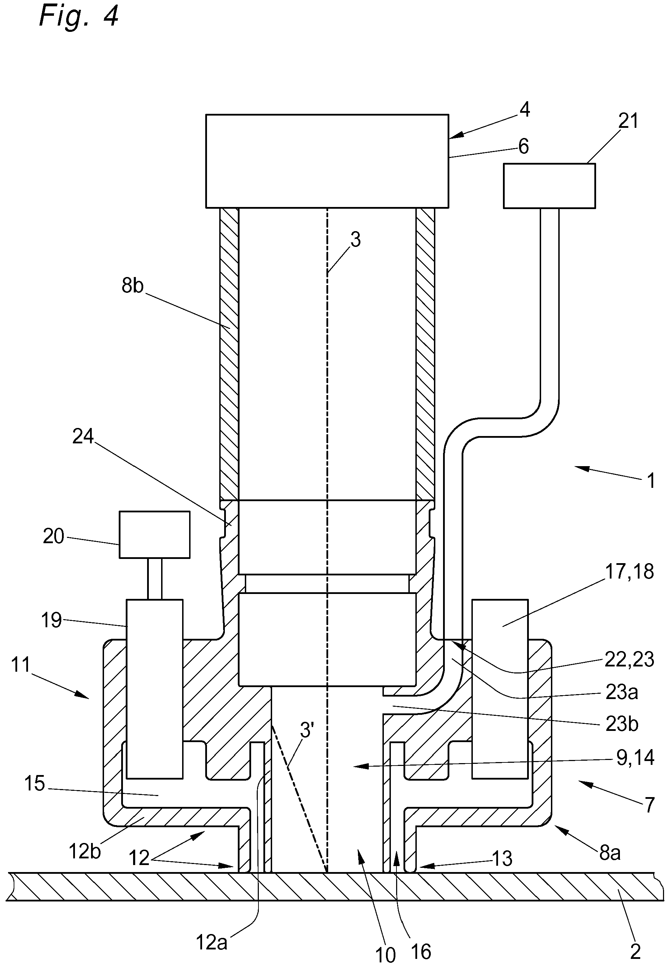

As is further apparent from the Fig., the shielding element base body 11 comprises a further opening 16 provided with the contact portion 13, i.e. particularly provided with a free distal end portion of the respective wall element 12 of the shielding element base body 11. The free inner space 15 is communicatively connected with the opening 16 provided with the contact portion 13. Hence, given the opening 16 provided with the contact portion 13 is closed, e.g. by abutting the contact portion 13 against a workpiece 2 (see e.g. Fig. 2, 4), the inner volume extending between the opening 16 and the free inner space 15 is closed as well.

Likewise, as exemplarily indicated by the dashed lines in Fig. 1, an adapter-like connection element comprising the contact portion 13, which contacts the workpiece 2 during operation of the apparatus 1, and the opening 16 provided with the contact portion 13 could be provided. The adapter-like connection element would be, particularly detachably, connectable or connected with the shielding element base body 11. The free inner space 15 of the shielding element base body 11 would be communicatively connected with the opening 16 provided with the contact portion 13 when the adapter-like connection element is connected with the shielding element base body 11. As such, the opening 16 provided with the adapter-like connection element would be in fluid-connection with the free-inner space 15 of the shielding element base body 11 when the adapter-like connection element is connected with the shielding element base body 11. The adapter-like connection element and the shielding element base body 11 would be provided with connection interfaces configured to interact so as to connect the adapter-like connection element with the shielding element base body 11, and vice versa. A respective, connection interface may be provided as a mechanical connection interface, such as a clamping, clicking, screwing interface, for instance.

In either case, the contact portion 13 is configured to abut against a workpiece 2 during operation of the apparatus 1 thereby, closing the at least one opening 16. More particularly, the contact portion 13 is configured to abut against a workpiece 2 during operation of the apparatus 1 thereby, closing the opening 16 in gas-tight manner such that a specific atmosphere and/or a specific pressure level within the free inner space 15 is maintained and/or a specific medium contained within the free inner space 15 cannot exit the free inner space 15 via the opening 16.

The apparatus 1 further comprises an atmosphere generating device 17 assigned to the free inner space 15, the atmosphere generating device 17 configured to generate and/or maintain a specific atmosphere within the free inner space 15. The atmosphere generating device 17 may be embodied as or comprise a gas supply device configured to generate and/or maintain a specific gas atmosphere in the free inner space 15. Additionally or alternatively, the apparatus 1 comprises a pressure level generating device 18 assigned to the free inner space 15, the pressure level generating device 18 configured to generate and/or maintain a specific pressure level within the free inner space 15. The pressure level generating device 18 may be embodied as or comprise a pump device configured to generate and/or maintain specific pressure level in the free inner space 15. Also, a respective pressure level generating device 18 may be embodied as or comprise a Venturi-pipe or -nozzle. As such, a specific atmosphere, e.g. a specific gas atmosphere, such as an inert gas atmosphere, and/or a specific pressure level, e.g. an under pressure, such as a vacuum, or an overpressure, may be generated and/or maintained in the free inner space 15. As will be more apparent from below, generating a specific atmosphere and/or a specific pressure level within the free inner space 15 enables monitoring if the shielding element base body 11 is correctly oriented and/or positioned relative to a workpiece 2 which is to be processed by means of the processing device 4 and apparatus 1, respectively, which is typically given when the contact portion 13 of the wall element 12 (directly) abuts against the workpiece 2 which is to be processed by means of the processing device 4 and apparatus 1, respectively.

The apparatus 1 may further comprise a detection device 19 assigned to the free inner space 15, the detection device 19 configured to detect an atmosphere and/or a pressure level and/or a medium within the free inner space 15 and/or configured to detect changes of an atmosphere and/or a pressure level and/or a medium within the free inner space 15. The detection device 19 may be embodied as or comprise at least one sensor device configured to sense chemical and/or physical quantities allowing for directly or indirectly deriving information on an atmosphere and/or a pressure level and/or a medium within the free inner space 15 and respective changes, respectively. A concrete example of a respective sensor device is a gas sensor, a pressure sensor, a temperature sensor.

The detection device 19 may also be configured to generate a detection information indicating a detected atmosphere and/or a detected pressure level and/or a detected medium within the free inner space 15 and/or a detected change of an atmosphere and/or a detected change of a pressure level and/or a detected change of a medium within the free inner space 15. A respective detection information may be directly or indirectly output to a hardware- and/or software embodied control device 20 of the apparatus 1 and/or output to an operator of the apparatus 1. A respective detection information may particularly, trigger outputting a, particularly audible, visual, or tactile, warning signal to an operator.

The apparatus 1 thus, comprises a hardware- and/or software embodied control device 20 configured to control operation of the processing device 4, particularly of an energy beam generating unit of the or assigned to the processing device 4, based on a detection information generated by the detection device 19. As such, the operation of the processing device 4 may be controlled based on a detected condition, e.g. an atmosphere condition, a pressure condition, etc., within the free inner space 15. Particularly, the operation of the processing device 4 may be changed, particularly interrupted, when a detection information indicates a change of a detected quantity, e.g. atmosphere, pressure level, etc., within the free inner space 15. In this regard, pre-definable or pre-defined threshold values may be taken into account such that a change, particularly an interrupt, of the operation of the processing device 4 is only effected when a detection information indicates that a detected quantity is above or below a (quantity-specific) threshold value. A respective control device 20 may thus, be configured to interrupt operation of the processing device 4 and/or to generate and communicate a, particularly acoustic, visual, or tactile, warning signal to an operator when a detection information generated by the detection device 19 indicates that an atmosphere and/or pressure level and/or medium reaches or exceeds a specific threshold value.

As a concrete example, a specific atmosphere and/or a specific pressure level within the free inner space 15 will typically change when the contact portion 13 of the wall element 12 does not directly abut against the workpiece 2 which is to be processed by means of the processing device 4 and apparatus 1, respectively. A respective change of specific atmosphere and/or a specific pressure level within the free inner space 15 can be correlated with a leakage. A respective change will be detected by the detection device 19 and a respective detection information will be generated which may result in that the operation of the processing device 4 will be interrupted until the contact portion 13 directly abuts the workpiece 2 which is to be processed by means of the processing device 4 and apparatus 1, respectively again. As such, monitoring if the shielding element base body 11 is correctly oriented and/or positioned relative to a workpiece 2 which is to be processed by means of the processing device 4 and apparatus 1, respectively, which is typically given when the contact portion 13 of the wall element 12 directly abuts against the workpiece 2 which is to be processed by means of the processing device 4 and apparatus 1, respectively, is enabled. Further, perforation, damage, etc., a wall element 12, e.g. caused by energy beams, particularly be secondary energy beams, of can be detected since also in this case change of specific atmosphere and/or a specific pressure level within the free inner space 15 can occur which is detectable by the detection device 19.

The apparatus 1 may further comprise a suction device 21 configured to generate and/or maintain a suction stream allowing for removing, particularly smoke-like, process gases and/or, particularly smoke-like, residues generated during operation of the apparatus 1 from the channel or passageway 14 delimited by the wall element 12. The suction device 21 may be embodied as or comprise a pump device configured to remove, particularly smoke-like, process gases and/or, particularly smoke-like, residues generated during operation of the apparatus 1 from the channel or passageway 14 defined or delimited by the wall element 12. Hence, process gases and/or residues which may negatively affect the properties of the primary energy beam 3 can be efficiently removed from the channel or passageway 14 defined or delimited by the wall element 13. Further, a controlled atmosphere and/or pressure level can be generated and/or maintained in the channel or passageway 14.

The suction device 21 may comprise a streaming channel structure 22 communicating with the channel or passageway 14, the streaming channel structure 22 comprising a streaming channel 23 through which the suction stream may stream during operation of the suction device 21, whereby the streaming channel 23 comprises at least two streaming channel sections 23a, 23b being differently oriented relative to each other. As such, respective streaming channel sections 23a, 23b may form a labyrinth structure. Hence, the design of the streaming channel 23 is chosen in such a manner, that an energy beam which has entered the streaming channel 23 at a first streaming channel section 23a will impinge upon a wall element defining or delimiting a second channel section 23b such that the energy beam is at least partly absorbed by the respective wall element. As such, wall elements having specific energy beam absorption properties, e.g. due to a specific absorption material, absorption coating, absorption color, etc., are preferred.

For the same purpose, the shielding element base body 11 may be at least partly, particularly completely, made from a material or material structure configured to absorb energy beams, particularly secondary energy beams 3'. As such, the shielding element base body 11 may comprise wall elements 12 having specific energy beam absorption properties, e.g. due to a specific absorption material, absorption coating, etc.

The Fig. also show that the shielding element 8 may comprise an adapter-like connection element 24 configured to, particularly detachably, connect the shielding element base body 11 with the processing device 4, particularly with the housing structure 6 of the processing device 4. As such, the shielding device 7 may be easily connected and, if required, e.g. due to service and/or repair, disconnected from the processing device 4 and vice versa. A respective adapter-like connection element 24 is provided with a connection interface (not explicitly shown) configured to enable a stable, yet typically detachable, connection of the shielding element base body 11 with the processing device 4. A respective a connection interface may be provided as a mechanical connection interface, such as a clamping, clicking, screwing interface, for instance.

A respective adapter-like connection element 24 may be integral with the shielding element base body 11 or integral with the processing device 4. Yet, it is also conceivable that a respective adapter-like connection element 24 is a separate component which is connectable with the shielding element base body 11 and the processing device 4, particularly a housing structure 6 of the processing device 4.

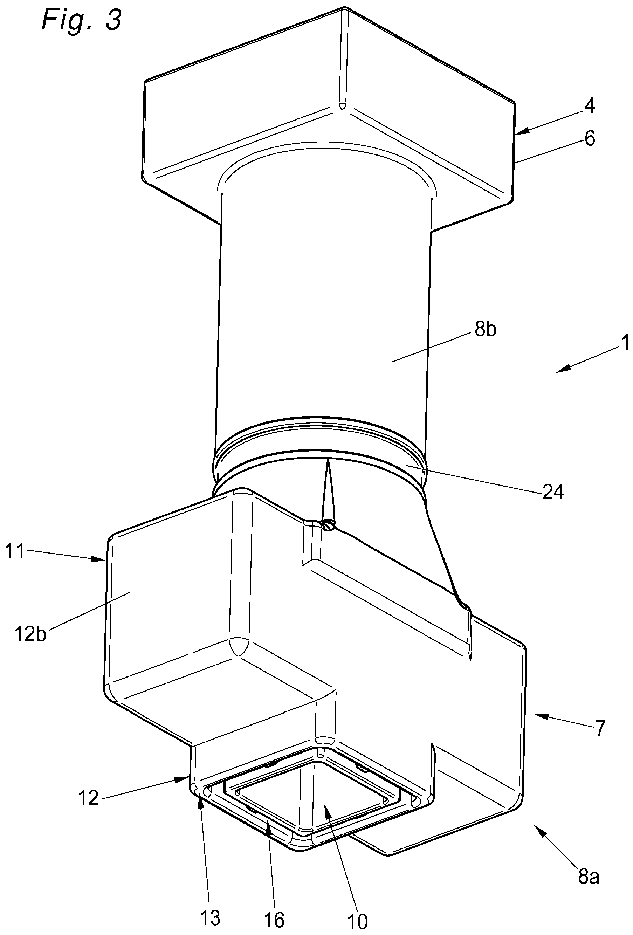

Fig. 3 shows a drawing of an apparatus 1 for processing of a workpiece 2 according to a second exemplary embodiment in an isometric view. Fig. 4 shows a principle drawing of a cut view of an apparatus 1 for processing of a workpiece 2 according to a corresponding exemplary embodiment of the apparatus 1.

In the embodiment of Fig. 3, 4, the shielding device 7 comprises a first conduct- or tube-like shielding element 8a and a further conduct- or tube-like shielding element 8b. The further shielding element 8b is connectable or connected in between the shielding element 8a, i.e. the shielding element 8a which contacts the workpiece 2, and the processing device 4, particularly the energy beam exit window 5 of the processing device 4. In this embodiment, the wall elements of the shielding elements, when connected, commonly define or delimit a respective channel or passageway 14 for directing a primary energy beam 3 towards a workpiece 2. Hence, all above annotations with respect to the first embodiment element apply in analogous manner to the second embodiment.

Even though not depicted in the Fig., the shielding element base body 11 may be extendable between at least a first extended state, e.g. a non-extended state, and at least a second extended state, e.g. an extended state, different from the first extended state, particularly so as to bridge different distances between the processing device 4 and a workpiece 2 which is to be processed by means of the processing device 4 and apparatus 1, respectively. As such, the shielding element base body 11 may be provided with flexibility such that it can be used in processing settings which may require different distances between the processing head 4 and the workpiece 2 which is to be processed by means of the processing device 4 and apparatus 1, respectively. A drive device, e.g. a motor, may be assigned to the shielding element base body 11. The drive device may be configured to, particularly automatically, transfer the shielding element base body 11 in the respective first and second extended states.

In either embodiment, the shielding element base body 11 may be at least partly, particularly completely, made from a polymer material. Yet, the shielding element base body 11 may also be made be at least partly, particularly completely, made from a non-polymer material, e.g. a metal.

In either embodiment, the shielding element base body 11 is an additively manufactured component. Additively manufacturing the shielding element base body 11 is of advantage since it allows for integrating different functionalities. All kinds of additive manufacturing processes may be used for manufacturing the shielding element base body. Merely as an example, selective laser sintering processes, selective laser melting processes, fused deposition modelling processes, binder jetting processes, may be used.

The apparatus 1 according to the embodiments of the Fig. allows for implementing a method of processing of a workpiece 2 by means of at least one energy beam 3, particularly a laser beam.

## Claims

1. Apparatus (1) for processing of a workpiece (2) by means of at least one energy beam, particularly a laser beam, the apparatus (1) comprising:
- a processing device (4) configured to direct at least one primary energy beam (3), particularly a primary laser beam, towards a workpiece (2) so as to process the workpiece (2),
- a shielding device (7) configured to shield the at least one primary energy beam and/or at least one secondary energy beam, particularly generated by reflection of the at least one primary energy beam at the workpiece (2), the shielding device (7) configured to extend between the processing device (4), particularly an energy beam exit window (5) of the processing device (4), and a workpiece (2) which is to be processed by means of the apparatus (1), whereby the shielding device (7) comprises at least one shielding element (8) which comprises a shielded inner volume which comprises an opening (10) through which a primary energy beam may exit the at least one shielding element (8), wherein the at least one shielding element (8) further comprises a, particularly conduct- or tube-like, shielding element base body (11), whereby the shielding element base body (11) comprises at least one wall element (12) comprising at least one free inner space (15),
- an atmosphere generating device (17) assigned to the at least one free inner space (15), the atmosphere generating device (17) configured to generate and/or maintain a specific atmosphere within the at least one free inner space (15), and/or
- a pressure level generating device (18) assigned to the at least one free inner space (15), the pressure level generating device (18) configured to generate and/or maintain a specific pressure level within the at least one free inner space (15); whereby
the at least one wall element (12) comprises a channel or passageway (14) for directing a primary energy beam (3) towards a workpiece (2) so as to process the workpiece (2), wherein
the at least one wall element (12) comprises at least one contact portion (13) which is configured to directly abut against the workpiece (2) during operation of the apparatus (1) thereby closing at least one further opening (16) in gas-tight manner; wherein
the shielding element base body (11) comprises the at least one further opening (16) which is provided with the contact portion (13) at a free distal end portion of the respective wall element of the shielding element base body (11); wherein
the free inner space (15) is communicatively connected with the at least one further opening (16);
**characterized in that** the shielding element base body (11) is completely an additively manufactured component.

2. Apparatus according to Claim 1, **further comprising** a hollow insert element insertable or inserted into the channel or passageway (14).

3. Apparatus according to any of the preceding Claims, **wherein** at least the contact portion (13) comprises an elastic material and/or an elastic material structure allowing for a, particularly gas-tight, contact between the contact portion (13) and a workpiece (2) which is to be processed by means of the apparatus (1).

4. Apparatus according to any of the preceding Claims, **wherein** at least the contact portion (13) comprises a geometric shape which is selected based on a contour of a specific workpiece (2) which is to be processed by means of the apparatus (1).

5. Apparatus according to any of the preceding Claims, **wherein** the shielding element base body (11) is extendable between at least a first extended state and at least a second extended state different from the first extended state, particularly so as to bridge different distances between the processing device (4) and a workpiece (2) which is to be processed by means of the apparatus (1).

6. Apparatus according to any of the preceding Claims, **wherein** the free inner space (15) is built by a wall-portions (12a, 12b) of a double-walled section of the at least one wall element (12).

7. Apparatus according to any of the preceding Claims, **further comprising** an adapter-like connection element comprising the at least one contact portion (13) or at least one contact portion (13), which contact portion (13), particularly directly, contacts a workpiece (2) during operation of the apparatus (1), and the at least one further opening (16) provided with the at least one contact portion (13), the adapter-like connection element, particularly detachably, connectable or connected with the shielding element base body (11), whereby the free inner space (15) is communicatively connected with the at least one further opening (16) provided with the contact portion (13) when the adapter-like connection element is connected with the shielding element base body (11).

8. Apparatus according to any of the preceding Claims, **further comprising** a detection device (19) assigned to the at least one free inner space (15), the detection device (19) configured to detect an atmosphere and/or a pressure level and/or a medium within the at least one free inner space (15) and/or configured to detect changes of an atmosphere and/or a pressure level and/or a medium within the at least one free inner space (15) and to generate a detection information indicating a detected atmosphere and/or a detected pressure level and/or a detected medium within the at least one free inner space (15) and/or a detected change of an atmosphere and/or a detected change of a pressure level and/or a detected change of a medium within the at least one free inner space (15).

9. Apparatus according to Claim 8, **further comprising** a control device (20) configured to control operation of the processing device (4), particularly of an energy beam generating unit of the processing device (4), based on a detection information generated by the detection device (19).

10. Apparatus according to any of the preceding Claims, **further comprising** a suction device (21) configured to generate and/or maintain a suction stream allowing for removing, particularly smoke-like, process gases and/or, particularly smoke-like, residues generated during operation of the apparatus (1) from the channel or passageway (14) delimited by the at least one wall element (12).

11. Apparatus according to Claim 10, **wherein** the suction device (21) comprises a streaming channel structure (22) communicating with the channel or passageway (14), the streaming channel structure (22) comprising at least one streaming channel (23) through which the suction stream may stream during operation of the suction device (21), whereby the at least one streaming channel (23) comprises at least two streaming channel sections (23a, 23b) being differently oriented relative to each other.

12. Apparatus according to any of the preceding Claims, **further comprising** an adapter-like connection element (24) configured to, particularly detachably, connect the shielding element base body (11) with the processing device (4), particularly with a housing structure (6) of the processing device (4); wherein the adapter-like connection element (24) is integral with the shielding element base body (11) or with the processing device (4).

13. Apparatus according to any of the preceding Claims, **wherein** the shielding element base body (11) is at least partly, particularly completely, made from a material or material structure configured to absorb secondary energy beams.

14. Shielding device (7) for an apparatus (1) for processing of a workpiece (2) according to any of the preceding Claims, the shielding device (7) configured to shield at least one primary energy beam (3) of a processing device (4) of an apparatus (1) the shielding device (7) is assigned to and/or at least one secondary energy beam (3'), particularly generated by reflection of the at least one primary energy beam (3) at a workpiece (2) which is to be processed by means of the apparatus (1) the shielding device (7) is assigned to, the shielding device (7) configured to extend between a processing device (4), particularly an energy beam exit window (5) of a processing device of an apparatus (1) the shielding device (7) is assigned to and a workpiece (2) which is to be processed by means of the processing device (4) of the apparatus (1) the shielding device (7) is assigned to,
the shielding device (7) comprises at least one shielding element (8) comprising a shielded inner volume which comprises an opening (10) through which a primary energy beam may exit the at least one shielding element (8), wherein the at least one shielding element (8) further comprises a, particularly conduct- or tube-like, shielding element base body (11), whereby
the shielding element base body (11) comprises at least one wall element (12) comprising at least one free inner space (15); wherein
the at least one wall element (12) comprises a channel or passageway (14) for directing a primary energy beam (3) towards a workpiece (2) so as to process the workpiece (2), wherein
the at least one wall element (12) comprises at least one contact portion (13) which is configured to directly abut against a workpiece (2) during operation of the apparatus (1) thereby, closing at least one further opening (16) in gas-tight manner; wherein
the shielding element base body (11) comprises the at least one further opening (16) provided with the contact portion (13), which is provided with a free distal end portion of the respective wall element of the shielding element base body (11); wherein
the free inner space (15) is communicatively connected with the at least one further opening (16) provided with the contact portion (13);
**characterized in that** the shielding element base body (11) is completely an additively manufactured component.

## Patentansprüche

1. Vorrichtung (1) zur Bearbeitung eines Werkstücks (2) mittels mindestens eines Energiestrahls, insbesondere eines Laserstrahls, die Vorrichtung (1) umfasst:
- eine Bearbeitungsvorrichtung (4), die so ausgebildet ist, daß sie mindestens einen Primärenergiestrahl (3), insbesondere einen Primärlaserstrahl, auf ein Werkstück (2) ausrichtet, um das Werkstück (2) zu bearbeiten,
- a shielding device (7) configured to shield the at least one primary energy beam and/or at least one secondary energy beam, particularly generated by reflection of the at least one primary energy beam at the workpiece (2), the shielding device (7) configured to extend between the processing device (4), particularly an energy beam exit window (5) of the processing device (4), and a workpiece (2) which is to be processed by means of the apparatus (1), whereby the shielding device (7) comprises at least one shielding element (8) which comprises a shielded inner volume which comprises an opening (10) through which a primary energy beam may exit the at least one shielding element (8), wherein the at least one shielding element (8) further comprises a, particularly conduct- or tube-like, shielding element base body (11), whereby the shielding element base body (11) comprises at least one wall element (12) comprising at least one free inner space (15),
- eine Atmosphäre erzeugende Einrichtung (17), die dem mindestens einen freien inneren Raum (15) zugeordnet ist, die Atmosphäre erzeugende Einrichtung (17), die so konfiguriert ist, dass sie eine bestimmte Atmosphäre innerhalb des mindestens einen freien inneren Raums (15) erzeugt und/oder aufrechterhält, und/oder
- eine Druckpegelerzeugungseinrichtung (18), die dem mindestens einen freien Innenraum (15) zugeordnet ist, die Druckpegelerzeugungseinrichtung (18), die so konfiguriert ist, dass sie einen bestimmten Druckpegel innerhalb des mindestens einen freien Innenraums (15) erzeugt und/oder aufrechterhält; wobei
Das mindestens eine Wandelement (12) umfasst einen Kanal oder Durchgang (14) zum Richten eines Primärenergiestrahls (3) auf ein Werkstück (2), um das Werkstück (2) zu verarbeiten, wobei
das mindestens eine Wandelement (12) weist mindestens einen Kontaktabschnitt (13) auf, der so ausgebildet ist, dass er während des Betriebs der Vorrichtung (1) direkt gegen das Werkstück (2) anstößt und dadurch mindestens eine weitere Öffnung (16) gasdicht schließt; wobei
der Abschirmelement-Basiskörper (11) die mindestens eine weitere Öffnung (16) aufweist, die mit dem Kontaktabschnitt (13) an einem freien distalen Endabschnitt des jeweiligen Wandelements des Abschirmelement-Basiskörpers (11) versehen ist; wobei
der freie innere Raum (15) ist kommunikativ mit der mindestens einen weiteren Öffnung (16) verbunden; **dadurch gekennzeichnet, dass**
der Abschirmelement-Grundkörper (11) ist vollständig ein additiv gefertigtes Bauteil.

2. Vorrichtung nach Anspruch 1, ferner umfassend ein hohles Einsatzelement, das in den Kanal oder Durchgang (14) einführbar oder einführbar ist.

3. Vorrichtung nach einem der vorhergehenden Ansprüche, wobeizumindest der Kontaktabschnitt (13) ein elastisches Material und/oder eine elastische Materialstruktur aufweist, die einen besonders gasdichten Kontakt zwischen dem Kontaktabschnitt (13) und einem Werkstück (2) ermöglicht, das mittels der Vorrichtung (1) verarbeitet werden soll.

4. Vorrichtung nach einem der vorhergehenden Ansprüche, wobei zumindest der Kontaktabschnitt (13) eine geometrische Form aufweist, die auf der Grundlage einer Kontur eines bestimmten Werkstücks (2) ausgewählt ist, das mit Hilfe der Vorrichtung (1) verarbeitet werden soll.

5. Vorrichtung nach einem der vorhergehenden Ansprüche, wobei der Abschirmelement-Grundkörper (11) zwischen mindestens einem ersten erweiterten Zustand und mindestens einem zweiten erweiterten Zustand, der sich von dem ersten erweiterten Zustand unterscheidet, erweiterbar ist, insbesondere um unterschiedliche Abstände zwischen der Verarbeitungsvorrichtung (4) und einem Werkstück (2) zu überbrücken, das mittels der Vorrichtung (1) verarbeitet werden soll.

6. Vorrichtung nach einem der vorhergehenden Ansprüche, wobei der freie Innenraum (15) durch eine Wandportion (12a, 12b) eines doppelwandigen Abschnitts des mindestens einen Wandelements (12) aufgebaut ist.

7. Vorrichtung nach einem der vorhergehenden Ansprüche, ferner umfassend ein adapterartiges Verbindungselement, das den mindestens einen Kontaktabschnitt (13) oder zumindest einen Kontaktabschnitt (13) umfasst, der insbesondere direkt ein Werkstück (2) während des Betriebs der Vorrichtung (1) kontaktiert, und die mindestens eine weitere Öffnung (16) mit dem mindestens einen Kontaktabschnitt (13) versehen, wobei das adapterartige Verbindungselement besonders lösbar, anschließbar oder mit dem Abschirmelement-Basiskörper (11) verbunden ist, wobei der freie innere Raum (15) kommunikativ mit der mindestens einen weiteren Öffnung (16) verbunden ist, die mit dem Kontaktabschnitt (13) vorgesehen ist, wenn das adapterartige Verbindungselement mit dem Abschirmelement-Basiskörper (11) verbunden ist.

8. Vorrichtung nach einem der vorhergehenden Ansprüche, ferner umfassend eine dem mindestens einen freien Innenraum (15) zugeordnete Detektionseinrichtung (19), die Erfassungseinrichtung (19) ausgebildet ist, eine Atmosphäre und/oder ein Druckniveau und/oder ein Medium in dem mindestens einen freien Innenraum (15) zu erfassen und/oder ausgebildet ist, Änderungen einer Atmosphäre und/oder eines Druckniveaus und/oder eines Mediums in dem mindestens einen freien Innenraum (15) zu erfassen und eine Erfassungsinformation zu erzeugen, die eine erfasste Atmosphäre und/oder ein erfasstes Druckniveau und/oder ein erfasstes Medium in dem mindestens einen freien Innenraum (15) und/oder eine erfasste Änderung einer Atmosphäre und/oder eine erfasste Änderung eines Druckniveaus und/oder eine erfasste Änderung eines Mediums in dem mindestens einen freien Innenraum (15) anzeigt.

9. Vorrichtung nach Anspruch 8, ferner umfassend eine Steuervorrichtung (20), die ausgebildet ist, um den Betrieb der Verarbeitungsvorrichtung (4), insbesondere einer Energiestrahlerzeugungseinheit der Verarbeitungsvorrichtung (4), auf der Grundlage einer von der Erfassungsvorrichtung (19) erzeugten Erfassungsinformation zu steuern.

10. Vorrichtung nach einem der vorhergehenden Ansprüche, ferner umfassend eine Saugvorrichtung (21), die so ausgebildet ist, dass sie einen Saugstrom erzeugt und/oder aufrechterhält, der es ermöglicht, besonders rauchartige Prozessgase und/oder besonders rauchartige Rückstände, die während des Betriebs der Vorrichtung (1) entstehen, aus dem Kanal oder Durchgang (14), der durch das mindestens eine Wandelement (12) begrenzt ist, zu entfernen.

11. Vorrichtung nach Anspruch 10, wobei die Saugvorrichtung (21) eine Streamingkanalstruktur (22) aufweist, die mit dem Kanal oder Durchgang (14) kommuniziert, wobei die Streamingkanalstruktur (22) mindestens einen Streamingkanal (23) aufweist, durch den der Saugstrom während des Betriebs der Saugvorrichtung (21) strömen kann, wobei der mindestens eine Streamingkanal (23) mindestens zwei Streamingkanalabschnitte (23a, 23b) aufweist, die unterschiedlich zueinander ausgerichtet sind.

12. Vorrichtung nach einem der vorhergehenden Ansprüche, ferner umfassend ein adapterartiges Verbindungselement (24), das so ausgebildet ist, dass es den Grundkörper des Abschirmelements (11) besonders lösbar mit der Verarbeitungsvorrichtung (4) verbindet, insbesondere mit einer Gehäusestruktur (6) der Verarbeitungsvorrichtung (4); wobei das adapterartige Verbindungselement (24) Integral mit dem Abschirmelement-Basiskörper (11) oder mit der Verarbeitungsvorrichtung (4) ist.

13. Vorrichtung nach einem der vorhergehenden Ansprüche, wobei der Grundkörper des Abschirmelements (11) zumindest teilweise, besonders vollständig, aus einem Material oder einer Materialstruktur besteht, die so konfiguriert ist, dass sie Sekundärenergiestrahlen absorbiert.

14. Abschirmvorrichtung (7) für eine Vorrichtung (1) zur Verarbeitung eines Werkstücks (2) nach einem der vorhergehenden Ansprüche ist die Abschirmvorrichtung (7) ausgebildet, um mindestens einen Primärenergiestrahl (3) einer Verarbeitungsvorrichtung (4) einer Vorrichtung (1) abzuschirmen, der Abschirmvorrichtung (7) zugeordnet und/oder mindestens einem Sekundärenergiestrahl (3"), insbesondere erzeugt durch Reflexion des mindestens einen Primärenergiestrahl (3) an einem Werkstück (2), das mittels der Vorrichtung (1) der Abschirmvorrichtung (7) zu bearbeiten ist, die Abschirmvorrichtung (7) ausgebildet, um sich zwischen einer Verarbeitungsvorrichtung (4), insbesondere einem Energiestrahlaustrittsfenster (5) einer Verarbeitungsvorrichtung einer Vorrichtung (1) der Abschirmvorrichtung (7) zu erstrecken, und einem Werkstück (2), das mittels der Verarbeitungsvorrichtung (4) der Vorrichtung (1) der Abschirmvorrichtung (7) zu verarbeiten ist, zugeordnet,
Die Abschirmvorrichtung (7) weist mindestens ein Abschirmelement (8) auf, das ein abgeschirmtes Innenvolumen aufweist, das eine Öffnung (10) umfasst, durch die ein Primärenergiestrahl aus dem mindestens ein Abschirmelement (8) austreten kann, wobei das mindestens ein Abschirmelement (8) ferner einen, insbesondere leit- oder rohrartigen, Abschirmelement-Basiskörper (11) umfasst, wobei
der Grundkörper des Abschirmelements (11) umfasst mindestens ein Wandelement (12) mit mindestens einem freien Innenraum (15); wobei
das mindestens eine Wandelement (12) umfasst einen Kanal oder Durchgang (14) zum Richten eines Primärenergiestrahls (3) auf ein Werkstück (2), um das Werkstück (2) zu verarbeiten, wobei
das mindestens eine Wandelement (12) weist mindestens einen Kontaktabschnitt (13) auf, der so ausgebildet ist, dass er während des Betriebs der Vorrichtung (1) direkt an einem Werkstück (2) anliegt und dabei mindestens eine weitere Öffnung (16) gasdicht schließt; wobei der Abschirmelement-Basiskörper (11) die mindestens eine weitere Öffnung (16) aufweist, die mit dem Kontaktabschnitt (13) versehen ist, der mit einem freien distalen Endabschnitt des jeweiligen Wandelements des Abschirmelement-Basiskörpers (11) versehen ist; wobei
der freie Innenraum (15) ist kommunikativ mit der mindestens einen weiteren Öffnung (16) verbunden, die mit dem Kontaktabschnitt (13) versehen ist;
**dadurch gekennzeichnet, dass** der Abschirmelement-Grundkörper (11) vollständig ein additiv gefertigtes Bauteil ist.

## Revendications

1. Appareil (1) pour le traitement d'une pièce (2) au moyen d'au moins un faisceau d'énergie, en particulier un faisceau laser, l'appareil (1) comprenant:
- un dispositif de traitement (4) configuré pour diriger au moins un faisceau d'énergie primaire (3), en particulier un faisceau laser primaire, vers une pièce (2) de manière à traiter la pièce (2),
- a shielding device (7) configured to shield the at least one primary energy beam and/or at least one secondary energy beam, particularly generated by reflection of the at least one primary energy beam at the workpiece (2), the shielding device (7) configured to extend between the processing device (4), particularly an energy beam exit window (5) of the processing device (4), and a workpiece (2) which is to be processed by means of the apparatus (1), whereby the shielding device (7) comprises at least one shielding element (8) which comprises a shielded inner volume which comprises an opening (10) through which a primary energy beam may exit the at least one shielding element (8), wherein the at least one shielding element (8) further comprises a, particularly conduct- or tube-like, shielding element base body (11), whereby the shielding element base body (11) comprises at least one wall element (12) comprising at least one free inner space (15),
- un dispositif générateur d'atmosphère (17) affecté à au moins un espace intérieur libre (15), le dispositif générateur d'atmosphère (17) configuré pour générer et/ou maintenir une atmosphère spécifique dans au moins un espace intérieur libre (15), et/ou
- un dispositif générateur de niveau de pression (18) affecté à au moins un espace intérieur libre (15), le dispositif générateur de niveau de pression (18) configuré pour générer et/ou maintenir un niveau de pression spécifique dans au moins un espace intérieur libre (15); par lequel
au moins un élément de paroi (12) comprend un canal ou un passage (14) pour diriger un faisceau d'énergie primaire (3) vers une pièce (2) de manière à traiter la pièce (2), dans lequel:
au moins un élément de paroi (12) comprend au moins une partie de contact (13) qui est configurée pour s'appuyer directement contre la pièce (2) pendant le fonctionnement de l'appareil (1), fermant ainsi au moins une autre ouverture (16) de manière étanche au gaz; dans lequel
le corps de base de l'élément de blindage (11) comprend au moins une ouverture supplémentaire (16) qui est fournie avec la partie de contact (13) à une partie distale libre de l'élément de paroi respectif du corps de base de l'élément de blindage (11); dans lequel l'espace intérieur libre (15) est relié de manière communicative à au moins une autre ouverture (16); **caractérisé en ce que**
le corps de base de l'élément de blindage (11) est entièrement un composant fabriqué additivement.

2. Appareil conforme à la revendication 1, comportant en outre un élément d'insertion creux insérable ou inséré dans le canal ou le passage (14).

3. Appareil selon l'une quelconque des revendications précédentes, dans lequel aumoins la partie de contact (13) comprend un matériau élastique et/ou une structure de matériau élastique permettant un contact, particulièrement étanche au gaz, entre la partie de contact (13) et une pièce (2) qui doit être traitée au moyen de l'appareil (1).

4. Appareil selon l'une quelconque des revendications précédentes, dans lequel au moins la partie de contact (13) comprend une forme géométrique qui est choisie sur la base d'un contour d'une pièce spécifique (2) qui doit être traitée au moyen de l'appareil (1).

5. Appareil selon l'une quelconque des revendications précédentes, dans lequel le corps de base de l'élément de blindage (11) est extensible entre au moins un premier état étendu et au moins un deuxième état étendu différent du premier état étendu, en particulier de manière à relier différentes distances entre le dispositif de traitement (4) et une pièce (2) qui doit être traitée au moyen de l'appareil (1).

6. Appareil selon l'une quelconque des revendications précédentes, dans lequel l'espace intérieur libre (15) est construit par des parties murales (12a, 12b) d'une section à double paroi de l'élément mural au moins (12).

7. Appareil selon l'une quelconque des revendications précédentes, comprenant en outre un élément de connexion de type adaptateur comprenant au moins une partie de contact (13) ou au moins une partie de contact (13), dont la partie de contact (13), en particulier directement, entre en contact avec une pièce (2) pendant le fonctionnement de l'appareil (1), et au moins une autre ouverture (16) fournie avec au moins une partie de contact (13), l'élément de connexion de type adaptateur, particulièrement détachable, connectable ou connecté au corps de base de l'élément de blindage (11), l'espace intérieur libre (15) étant relié par communication à au moins une autre ouverture (16) fournie avec la partie de contact (13) lorsque l'élément de connexion de type adaptateur est connecté au corps de base de l'élément de blindage (11).

8. Appareil selon l'une quelconque des revendications précédentes, comprenant en outre un dispositif de détection (19) affecté à au moins un espace intérieur libre (15), le dispositif de détection (19) configuré pour détecter une atmosphère et/ou un niveau de pression et/ou un milieu dans au moins un espace intérieur libre (15) et/ou configuré pour détecter des changements d'atmosphère et/ou de niveau de pression et/ou un milieu dans au moins un espace intérieur libre (15) et pour générer une information de détection indiquant une atmosphère et/ou un niveau de pression détectés et/ou un milieu détecté dans au moins un espace intérieur libre (15) et/ou une modification détectée d'une atmosphère et/ou une modification détectée d'un niveau de pression et/ou une modification détectée d'un milieu dans au moins un espace intérieur libre (15).

9. Appareil selon la revendication 8, comprenant en outre un dispositif de commande (20) configuré pour contrôler le fonctionnement du dispositif de traitement (4), en particulier d'une unité génératrice de faisceau d'énergie du dispositif de traitement (4), sur la base d'une information de détection générée par le dispositif de détection (19).

10. Appareil conforme à l'une quelconque des revendications précédentes, comprenant en outre un dispositif d'aspiration (21) configuré pour générer et/ou maintenir un flux d'aspiration permettant d'éliminer, en particulier de type fumigène, les gaz de procédé et/ou, en particulier de type fumigène, les résidus générés pendant le fonctionnement de l'appareil (1) du canal ou du passage (14) délimité par au moins un élément de paroi (12).

11. Appareil selon la revendication 10, dans lequel le dispositif d'aspiration (21) comprend une structure de canal de diffusion (22) communiquant avec le canal ou le passage (14), la structure de canal de diffusion (22) comprenant au moins un canal de diffusion (23) à travers lequel le flux d'aspiration peut circuler pendant le fonctionnement du dispositif d'aspiration (21), dans lequel au moins un canal de diffusion (23) comprend au moins deux sections de canal de diffusion (23a, 23b) étant orientés différemment l'un par rapport à l'autre.

12. Appareil conforme à l'une quelconque des revendications précédentes, comprenant en outre un élément de connexion de type adaptateur (24) configuré pour relier, de manière particulièrement détachable, le corps de base de l'élément de blindage (11) au dispositif de traitement (4), en particulier avec une structure de boîtier (6) du dispositif de traitement (4); dans laquelle l'élément de connexion de type adaptateur (24) fait partie intégrante du corps de base de l'élément de blindage (11) ou du dispositif de traitement (4).

13. Appareils selon l'une quelconque des revendications précédentes, dans lesquels le corps de base de l'élément de blindage (11) est au moins partiellement, particulièrement complètement, fabriqué à partir d'un matériau ou d'une structure matérielle configurée pour absorber des faisceaux d'énergie secondaire.

14. Dispositif de blindage (7) pour un appareil (1) pour le traitement d'une pièce (2) selon l'une des revendications précédentes, le dispositif de blindage (7) configuré pour protéger au moins un faisceau d'énergie primaire (3) d'un dispositif de traitement (4) d'un appareil (1) le dispositif de blindage (7) est affecté à et/ou au moins un faisceau d'énergie secondaire (3'), en particulier généré par la réflexion d'au moins un faisceau d'énergie primaire (3) sur une pièce (2) qui doit être traitée au moyen de l'appareil (1) le dispositif de blindage (7) est affecté à, le dispositif de blindage (7) configuré pour s'étendre entre un dispositif de traitement (4), en particulier une fenêtre de sortie de faisceau d'énergie (5) d'un dispositif de traitement d'un appareil (1) le dispositif de blindage (7) est affecté à et une pièce (2) qui doit être traitée au moyen du dispositif de traitement (4) de l'appareil (1) le dispositif de blindage (7) est affecté, le dispositif de blindage (7) comprend au moins un élément de blindage (8) comprenant un volume intérieur blindé qui comprend une ouverture (10) par laquelle un faisceau d'énergie primaire peut sortir d'au moins un élément de blindage (8), dans lequel au moins un élément de blindage (8) comprend en outre un corps de base d'élément de blindage, en particulier en forme de conducteur ou de tube (11), dans lequel:
le corps de base de l'élément de blindage (11) comprend au moins un élément mural (12) comprenant au moins un espace intérieur libre (15); dans lequel
au moins un élément de paroi (12) comprend un canal ou un passage (14) pour diriger un faisceau d'énergie primaire (3) vers une pièce (2) de manière à traiter la pièce (2), dans lequel:
au moins un élément de paroi (12) comprend au moins une partie de contact (13) qui est configurée pour s'appuyer directement contre une pièce (2) pendant le fonctionnement de l'appareil (1), fermant ainsi au moins une autre ouverture (16) de manière étanche au gaz; dans lequel
le corps de base de l'élément de blindage (11) comprend au moins une ouverture supplémentaire (16) munie de la partie de contact (13), qui est munie d'une partie distale libre de l'élément de paroi respectif du corps de base de l'élément de blindage (11); dans lequel
l'espace intérieur libre (15) est relié de manière communicative à au moins une autre ouverture (16) fournie avec la partie de contact (13);
**caractérisé en ce que** le corps de base de l'élément de blindage (11) est entièrement un composant fabriqué additivement.
